# EUROPÄISCHE PATENTSCHRIFT

(11) **EP 0 718 166 B1**
(45) Veröffentlichungstag und Bekanntmachung des Hinweises auf die Patenterteilung: **16.10.2002**
(21) Anmeldenummer: 95120003.9
(22) Anmeldetag: 18.12.1995
(51) Int. Cl.: B60T 1/087, F16D 57/04

(54) **Antriebseinheit mit einer Brennkraftmaschine und einem hydrodynamischen Retarder**
Propulsion unit with an internal combustion engine and a hydrodynamic retarder
Unité d'entraînement à un moteur à combustion interne et un ralentisseur hydrodynamique

(30) Priorität: 23.12.1994 DE 4446288
(43) Veröffentlichungstag der Anmeldung: 26.06.1996
(73) Patentinhaber: Voith Turbo GmbH & Co. KG, 89522 Heidenheim (DE)
(72) Erfinder: Friedrich, Jürgen, D-74564 Crailsheim (DE); Möller, Heribert, D-91623 Sachsen (DE); Gebhardt, Hans, D-90759 Langenzenn (DE); Vogelsang, Klaus, D-74564 Crailsheim (DE)
(74) Vertreter: Dr. Weitzel & Partner

(56) Entgegenhaltungen:
- DE-A- 4 408 350
- DE-C- 3 301 560
- DE-C- 3 713 580
- FR-A- 2 673 900
- US-A- 3 650 358
- US-A- 3 720 372
- US-A- 3 945 473
- US-A- 5 029 682
- REVUE TECHNIQUE DIESEL, Bd. juillet-aout-septembre 1985, Nr. 134, BOULOGNE-BILLANCOURT FR, Seiten 18-19, XP002033165 D. VIGNON: "Le freinage: les ralentisseurs hydrauliques"

## Beschreibung

Die Erfindung betrifft eine Antriebseinheit, insbesondere für ein Kraftfahrzeug, gemäß dem Oberbegriff von Anspruch 1.

Eine solche Antriebseinheit ist aus DE 44 08 350 bekanntgeworden (Dokument 1).

Retarder werden bei schweren Fahrzeugen vor allem eingesetzt, um die insbesondere bei Bremsung aus hoher Fahrgeschwindigkeit (Anpassungsbremsung) anfallende kinetische Bremsenergie aufzunehmen und in Wärme umzusetzen, aber auch für geforderte Dauerbremsleistungen sind Retarder gut geeignet, beispielsweise bei einer konstanten Geschwindigkeit von 30 km/h und bei einem Gefälle von 7 %. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Der aus der US-PS 3 720 372 (Dokument 2) bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 (Dokument 3) ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder wird von der Kurbelwelle einer Verbrennungskraftmaschine angetrieben, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist. Die Lagerung des Rotors erfolgt mit einem Wälzlager und die Abdichtung zwischen Gestell und Rotorwelle ist mit zwei Lippendichtungen ausgeführt.

Bei der Antriebseinheit gemäß DE-37 13 580 C1 ist der hydrodynamische Retarder im Traktionsfluß dem Getriebe vorgeschaltet. Man spricht deshalb von einem Primär-Retarder.

Primär-Retarder sind entweder öl- oder wasserbetrieben. Der Verlauf des Drehmomentes über der Fahrgeschwindigkeit des Fahrzeuges entspricht durch den Einfluß des nachgesetzten Getriebes einer Hyperbel. Hieraus folgt, daß gerade bei geringer Fahrgeschwindigkeit eine verhältnismäßig hohe Bremswirkung aufgebracht wird.

Naturgemäß besteht der Nachteil solcher Primär-Retarder darin, daß die Bremskraft bei hoher Fahrgeschwindigkeit abnimmt. Auch bei einem Abfall der Motordrehzahl fällt das Bremsmoment, das der Retarder erzeugt. Auch dies kann bei bestimmten Verkehrssituationen sehr nachteilig sein.

Es sind auch sogenannte Sekundär-Retarder bekannt geworden. Diese sind bei einer Antriebseinheit im Antriebsstrang dem Getriebe nachgeschaltet.

Hierbei verläuft das vom Retarder erzeugte Bremsmoment, aufgetragen über der Fahrgeschwindigkeit, jedenfalls in einem ersten Abschnitt parabolisch. Das heißt, daß das Bremsmoment mit zunehmender Fahrgeschwindigkeit ansteigt, und demgemäß bei hoher Fahrgeschwindigkeit relativ hoch ist, was natürlich vorteilhaft ist. Sekundär-Retarder haben aber demgemäß gleichzeitig den Nachteil, daß sie bei geringer Fahrgeschwindigkeit nur ein geringes Bremsmoment erzeugen.

US-A-5 029 682 beschreibt eine Antriebseinheit, die ebenfalls einen Primär-Retarder und einen Sekundär-Retarder aufweist. Die beiden Retarder sind dazu bestimmt, sich gegenseitig zu ergänzen, indem sie jeweils bei unterschiedlichen Geschwindigkeitsbereichen eingesetzt werden, in Kombination mit Scheibenbremsen.

Der Erfindung liegt die Aufgabe zugrunde, eine Antriebseinheit gemäß dem Oberbegriff von Anspruch 1 derart zu gestalten, daß das mittels des Retarders aufgebrachte Bremsmoment sowohl bei geringer als auch bei hoher Fahrgeschwindigkeit akzeptabel ist, und zwar bei einem großen Gleichmaß der Bremswirkung über längere Zeitspannen hinweg.

Diese Aufgabe wird durch die kennzeichnenden Merkmale von Anspruch 1 gelöst. Demgemäß wird somit vor und nach dem Getriebe jeweils ein hydrodynamischer Retarder vorgesehen, außerdem ein Regler, der bestimmte, in Anspruch 1 definierte Funktionen ausführt. Damit wird im einzelnen folgendes erreicht: Auch bei geringer Fahrgeschwindigkeit ist das Bremsmoment akzeptabel, da hierbei nämlich der Primär-Retarder wirkt. Desgleichen ist aber auch bei hoher Fahrgeschwindigkeit und/oder bei niedriger Motordrehzahl ebenfalls ausreichend Bremsmoment vorhanden, da hierbei der Sekundär-Retarder wirkt. Die Bremswirkung kann damit über einen relativ großen Geschwindigkeitsbereich hinweg sowie während längerer Zeitspannen konstant gehalten werden, ohne daß es unbedingt der Mitwirkung von mechanischen Pressen bedarf.

Sowohl der Primär-Retarder als auch der Sekundär-Retarder lassen sich als sogenannte Wasserpumpenretarder ausbilden. Dies bedeutet, daß das Arbeitsmedium des Retarders gleichzeitig als Kühlmedium für den Kühlkreislauf des Fahrzeuges ausgenutzt wird. Das Arbeitsmedium ist in diesem Falle Wasser.

Die verfügbare Bremswirkung der Antriebseinheit ist optimierbar, indem je nach Verkehrssituation bzw. Betriebszustand eine Aufteilung auf das eine oder auf das andere Retardersystem erfolgen kann. Selbstverständlich läßt sich diese Aufteilung durch einen Regler vornehmen. Durch die Leistungsteilung zwischen Primär-Retarder und Sekundär-Retarder wird die übertragbare Leistungsgrenze der Schaltkupplung, die im allgemeinen eine Reibkupplung ist, genau eingehalten. Auch in den Schaltpausen erfolgt keine Zugkraftunterbrechung, und zwar über einen weiten Geschwindigkeitsbereich hinweg, besonders in einem Bereich hoher Bremsleistungen. Die Bremswirkung kann über einen relativ großen Geschwindigkeitsbereich hinweg nahezu konstant gehalten werden.

Die Erfindung ist anhand der Zeichnung näher erläutert.

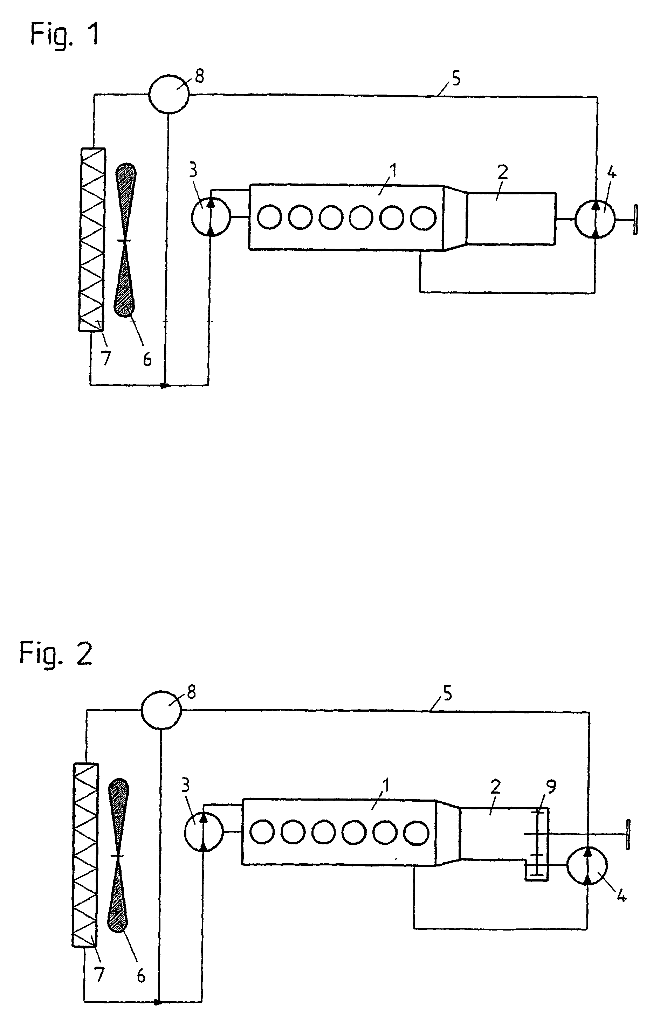

Figur 1 veranschaulicht schematisch eine Antriebseinheit für ein Kraftfahrzeug mit einem Verbrennungsmotor 1 und einem Getriebe 2. Dem Motor 1 ist ein Primär-Retarder 3 vorgeschaltet, und dem Getriebe 2 ist ein Sekundär-Retarder 4 nachgeschaltet.

Weiterhin ist ein Kühlkreislauf vorgesehen, mit Kühlwasserleitungen 5, einem Lüfter 6, einem Kühler 7 und einem Thermostaten 8.

Der Rotor des Primär-Retarders 3 ist auf der Kurbelwelle des Motors 1 fliegend gelagert und somit achsparallel mit Motor 1 und Getriebe 2. Auch Retarder 4 ist achsparallel in bezug auf Motor 1 und Getriebe 2 angeordnet. Dabei ist zwischen Getriebe 2 und Sekundär-Retarder 4 kein Hochgang vorgesehen.

Die Ausführungsform gemäß Figur 2 weist wiederum einen Primär-Retarder 3 und einen Sekundär-Retarder 4 auf. Im Gegensatz zu der Ausführungsform gemäß Figur 1 ist hierbei zwischen Getriebe 2 und Sekundär-Retarder 4 ein Hochgang 9 geschaltet. Im übrigen sind alle wesentlichen Bauteile dieser Antriebseinheit gleich jener gemäß Figur 1.

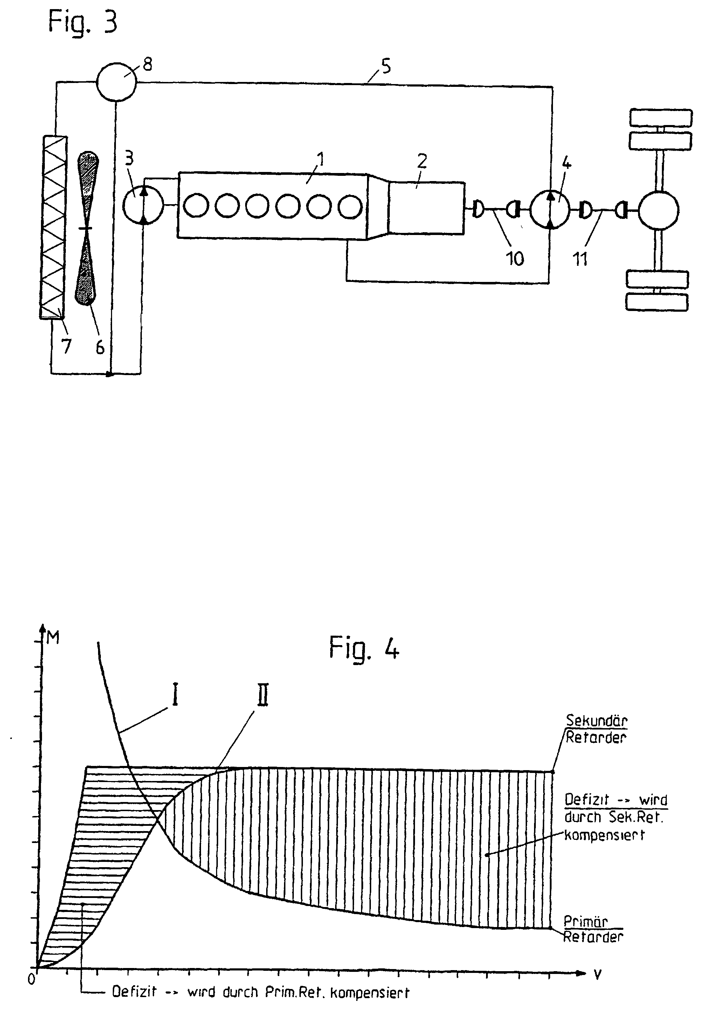

Bei der Ausführungsform gemäß Figur 3 ist zwischen Getriebe 2 und Sekundär-Retarder 4 ein erster Gelenkwellenstrang 10 angeordnet, und nach dem Sekundär-Retarder 4 ein zweiter Gelenkwellenstrang 11.

Figur 4 zeigt ein Diagramm, das den Bremsmomentenverlauf M über der Fahrgeschwindigkeit V veranschaulicht.

Das Diagramm ist aus zwei Kurven zusammengesetzt, nämlich zum einen aus Kurve I des Primär-Retarders, sowie aus Kurve II des Sekundär-Retarders.

Das horizontal schraffierte Feld stellt ein Bremsmomenten-Defizit dar, das bei alleiniger Anwendung des Sekundär-Retarders entstehen würde. Es wird jedoch kompensiert durch den Primär-Retarder. Das vertikal schraffierte Feld stellt ein Defizit dar, das bei alleiniger Anwendung des Primär-Retarders auftreten würde. Es wird jedoch kompensiert durch den Sekundär-Retarder.

## Patentansprüche

1. Antriebseinheit, insbesondere für ein Kraftfahrzeug,
1.1 mit einem Verbrennungsmotor (1) und einem Getriebe (2);
1.2 mit einem hydrodynamischen Retarder (3), der einen Rotor und einen Stator aufweist;
1.3 der Retarder (3) ist als Primär-Retarder dem Getriebe (2) im Traktionsfluß vorgeschaltet;
1.4 der Retarder (3) ist ein Wasserpumpenretarder, der gleichzeitig Kühlmittel des Kühlkreislaufes umwälzt;
**gekennzeichnet durch** die folgenden Merkmale:
1.5 es ist ein weiterer Retarder (4), dem Getriebe (2) als Sekundär-Retarder im Traktionsfluß nachgeschaltet, wobei der zweite Retarder ebenfalls ein Wasserpumpenretarder ist, der gleichzeitig Kühlmittel des Kühlkreislaufes umwälzt;
1.6 es ist ein Regler vorgesehen, der die verfügbare Bremskraft des Primär-Retarders (3) und des Sekundär-Retarders (4) derart aufteilt, daß die Bremswirkung über einen relative großen Geschwindigkeitsbereich hinweg wenigstens annähernd konstant gehalten wird;
1.7 der Rotor des Primär-Retarders ist auf der Kurbelwelle des Motors (1) gelagert;
1.8 der Sekundär-Retarder ist außerhalb des Getriebes (2) angeordnet, wobei er entweder achsparallel mit Motor (1) und Getriebe (2), mit oder ohne Hochgang zwischen Getriebe (2) und Sekundär-Retarder (4) oder mit einem Gelenkwellenstrang (10) zwischen Getriebe (2) und Sekundär-Retarder (4) angeordnet ist.

2. Antriebseinheit gemäß Anspruch 1, **dadurch gekennzeichnet, daß** der Sekundär-Retarder (4) achsparallel mit Motor (1) und Getriebe (2) mit einem Hochgang (9) zwischen Getriebe (2) und Sekundär-Retarder (4) angeordnet ist.

3. Antriebseinheit gemäß Anspruch 1 , **dadurch gekennzeichnet, daß** der Sekundär-Retarder (4) achsparallel mit Motor (1) und Getriebe (2) ohne Zwischenschaltung eines Hochganges (9) zwischen Getriebe (2) und Sekundär-Retarder (4) angeordnet ist.

4. Antriebseinheit gemäß Anspruch 1, **dadurch gekennzeichnet, daß** zwischen Getriebe (2) und Sekundär-Retarder (4) ein Gelenkwellenstrang (10) angeordnet ist, und insbesondere nach dem Sekundär-Retarder (4) ein zweiter Gelenkwellenstrang (11) angeordnet ist.

5. Antriebseinheit gemäß einem der Ansprüche 1 bis 4, **dadurch gekennzeichnet, daß** der Rotor des Primär-Retarders (3) auf der Kurbelwelle des Motors (1) fliegend gelagert ist.

## Claims

1. A drive unit, especially for a motor vehicle,
1.1 with an internal combustion engine (1) and a gear unit (2);
1.2 with a hydrodynamic retarder (3) comprising a rotor and a stator;
1.3 with the retarder (3) being connected upstream to the gear unit (2) as a primary retarder in the traction flow;
1.4 with the retarder (3) being a water pump retarder which simultaneously circulates the coolant of the cooling circuit;
**characterized by** the following features:
1.5 a further retarder (4) is connected downstream of the gear unit (2) as a secondary retarder in the traction flow, with the second retarder also being a water pump retarder which simultaneously circulates coolant of the cooling circuit;
1.6 a closed-loop controller is provided which divides the available brake force of the primary retarder (3) and the secondary retarder (4) in such a way that the braking effect is held at least approximately constant over a relatively large speed range;
1.7 the rotor of the primary retarder is held on the crankshaft of the engine (1);
1.8 the secondary retarder is disposed outside of the gear unit (2), with the same being arranged either axially parallel to the engine (1) and gear unit (2), with or without high gear between gear (2) and secondary retarder (4) or with a card shafting (10) between gear (2) and secondary retarder (4).

2. A drive unit as claimed in claim 1, **characterized in that** the secondary retarder (4) is arranged axially parallel to the engine (1) and the gear unit (2) with a high gear (9) between gear unit (2) and secondary retarder (4).

3. A drive unit as claimed in claim 1, **characterized in that** the secondary retarder (4) is arranged axially parallel to the engine (1) and the gear unit (2) without interposing a high gear (9) between gear unit (2) and secondary retarder (4).

4. A drive unit as claimed in claim 1, **characterized in that** the a card shafting (10) is arranged between gear unit (2) and the secondary retarder (4) and a second card shafting (11) is arranged especially after the secondary retarder (4).

5. A drive unit as claimed in one of the claims 1 to 4, **characterized in that** the rotor of the primary retarder (3) is held on the crankshaft of the engine (1) in an overhung position.

## Revendications

1. Unité d'entraînement, notamment pour un véhicule à moteur,
1.1 avec un moteur à combustion inteme (1) et un engrenage (2);
1.2 avec un retardateur hydrodynamique (3) présentant un rotor et un stator ;
1.3 dans laquelle le retardateur (3) est un retardateur primaire monté en amont de l'engrenage (2) dans la chaîne de traction ;
1.4 dans laquelle le retardateur (3) est un retardateur à pompe à eau qui fait en même temps circuler le fluide de refroidissement du circuit de refroidissement ;
1.5 **caractérisée en ce qu'**il est prévu un autre retardateur (4) monté en aval de l'engrenage (2) dans la chaîne de traction pour servir de retardateur secondaire, le deuxième retardateur étant lui aussi un retardateur à pompe à eau qui fait en même temps circuler le fluide de refroidissement du circuit de refroidissement ;
1.6 **en ce qu'**il est prévu un régulateur qui répartit la force de freinage disponible du retardateur primaire (3) et du retardateur secondaire (4) de telle sorte que l'effet de freinage soit maintenu au moins approximativement constant sur une plage de vitesses relativement large ;
1.7 **en ce que** le rotor du retardateur primaire est supporté sur le vilebrequin du moteur (1);
1.8 **en ce que** le retardateur secondaire est disposé à l'extérieur de l'engrenage (2), soit parallèlement à l'axe du moteur (1) et de l'engrenage (2), avec ou sans multiplication entre l'engrenage (2) et le retardateur secondaire (4), soit avec un arbre à cardan (10) entre l'engrenage (2) et le retardateur secondaire (4).

2. Unité d'entraînement selon la revendication 1, **caractérisée en ce que** le retardateur secondaire (4) est disposé parallèlement à l'axe du moteur (1) et de l'engrenage (2) avec une multiplication (9) entre l'engrenage (2) et le retardateur secondaire (4).

3. Unité d'entraînement selon la revendication 1, **caractérisée en ce que** le retardateur secondaire (4) est disposé parallèlement à l'axe du moteur (1) et de l'engrenage (2) sans multiplication (9) entre l'engrenage (2) et le retardateur secondaire (4).

4. Unité d'entraînement selon la revendication 1, **caractérisée en ce qu'**il est prévu entre l'engrenage (2) et le retardateur secondaire (4) un arbre à cardan (10) et en particulier **en ce qu'**il est prévu un deuxième arbre à cardan (11) après le retardateur secondaire (4).

5. Unité d'entraînement selon l'une quelconque des revendications 1 à 4, **caractérisée en ce que** le rotor du retardateur primaire (3) est supporté de façon flottante sur le vilebrequin du moteur (1).
